# EUROPEAN PATENT APPLICATION

(11) **EP 2 088 496 A1**
(43) Date of publication of application: **12.08.2009**
(21) Application number: 08151079.4
(22) Date of filing: 05.02.2008
(51) Int. Cl.: G06F 3/02

(54) **Narrow angular keyboard for a handheld mobile communication device**

(71) Applicant: Research In Motion Limited, Waterloo, Ontario N2L 3W8 (CA)
(72) Inventor: Rak, Roman P., Waterloo Ontario N2T 2V8 (CA)
(74) Representative: Phillips, Emily Elizabeth

(57) **Abstract**

Handheld wireless communication device is presented and includes a housing with a display above a keyboard exposed for user actuation. The length of the device is greater than the width, and the width is less than five centimeters. The keyboard has a right-hand key field and a left hand key field. Each key of the right-hand key field has a longitudinal axis oriented at a left-to-right inclined angle from the vertical centerline, and each key of a left-hand key field has a longitudinal axis oriented at a right-to-left inclined angle from the vertical centerline. The respective inclined angles are between about ten degrees and about fifteen degrees. A left boundary and a right boundary of the keyboard is located adjacent the left and right lateral side edges (respectively) of the device so that the keyboard spans a substantial entirety of the width of the device.

## Description

### FIELD

This disclosure, in a broad sense, is directed toward a handheld wireless communication device that includes a narrow angular keyboard having a plurality of externally accessible and individually actuable keys.

### BACKGROUND

Keyboards are used on many mobile devices, including Personal Digital Assistants (PDAs), telephones, and handheld wireless communication devices. The keyboard of a handheld electronic device, and more particularly, handheld mobile communication devices, can be used to dial phone numbers for voice calls as well as to enter text for sending messages electronically. The keyboard for text entry can take many different forms including a keyboard in which all letters of the alphabet are shown on respective keys. Keyboard size can also vary and has been reduced over the years, as newer, smaller devices have become popular. Cell phones, for example, are now sized to fit in one's pocket or the palm of the hand. As the size of the devices has decreased, the more important it has become to utilize the entire keyboard surface as efficiently as possible.

Many keyboards on mobile devices have an input device for navigation through the graphical user interface. These interfaces include such devices as trackballs and rotating wheels which can be used to effect movement of a cursor or pointer, or to scroll up, down and about a displayed page. These navigation devices often occupy a relatively large amount of space on the incorporating mobile device. Because the navigation device is frequently used and often requires fine control, a lower end size limitation will normally be observed by device designers. To accommodate such larger, more convenient navigation devices on the housing of the mobile device, the amount of space that is available for the keys of the keyboard is correspondingly reduced if the keyboard and navigation device are proximately located to one another.

Currently, handheld mobile communication devices are being designed with ever smaller widths, which further reduce the front surface area that a keyboard can occupy. This reduction in front surface area presents the challenge of designing a keyboard that is both easy to use while providing a full QWERTY layout. Such handheld mobile communication devices are often used to send electronic mail and other data messages. These types of communications often take time to enter the desired text and cause the user fatigue and difficulty of use. It is desirable to design a handheld mobile device that accommodates both a reduced width and a keyboard wherein each key of the keyboard is associated with an alphabetic character.

### BRIEF DESCRIPTION OF THE DRAWINGS

Examplary arrangements conducted and configured according to the advantageous solutions presented herein are depicted in the accompanying drawings where in

FIG. 1 is a front view of a handheld wireless communication device comprising a narrow angular full QWERTY keyboard;

FIG. 2 is a block diagram representing a handheld wireless communication device interacting in a communication network;

FIG. 3A illustrates an examplary QWERTY keyboard layout;

FIG. 3B illustrates an examplary QWERTZ keyboard layout;

FIG. 3C illustrates an examplary AZERTY keyboard layout;

FIG. 3D illustrates an examplary Dvorak keyboard layout;

FIG. 4 illustrates a QWERTY keyboard layout paired with a traditional ten-key keyboard;

FIG. 5 illustrates ten digits comprising the numerals 0-9 arranged as on a telephone keypad, including the * and # astride the zero;

FIG. 6 illustrates a numeric phone key arrangement according to the ITU Standard E.161 including both numerals and letters;

FIG. 7 is a front view of the lower portion of a handheld wireless communication device having a narrow angular keyboard;

FIG. 8 is a vertical cross-section at the dashed line A-A on the handheld wireless communication device of FIG. 7;

FIG. 9 is a horizontal cross-section at the dashed line B-B on a handheld wireless communication device of FIG. 7;

FIG. 10 is a front view of a handheld wireless communication device further illustrating longitudinal axes of the angularly disposed keys of the left and right key fields; and

FIG. 11 is a front view of the lower portion of a handheld wireless communication device and a user's thumbs and associated activation zones.

### DETAILED DESCRIPTION

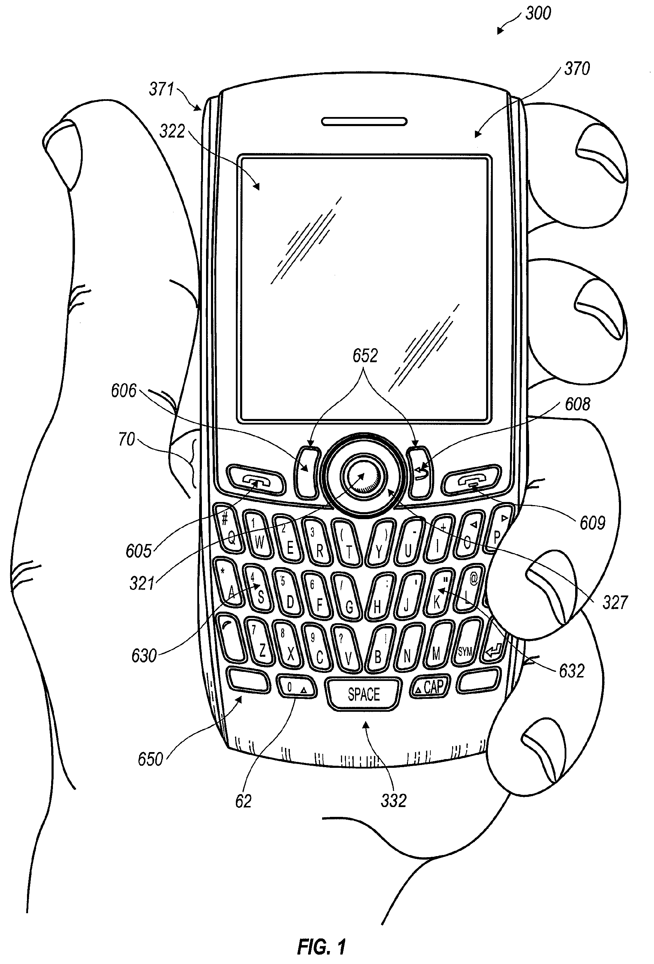

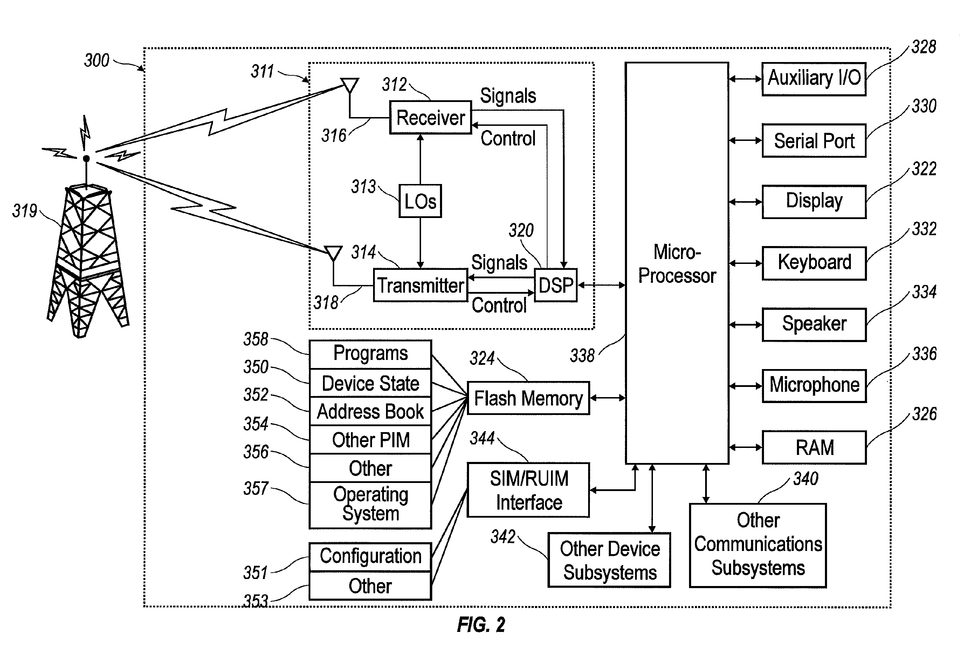

An examplary handheld wireless communication device 300 is shown in FIG. 1, and the device's cooperation in a wireless network 319 is exemplified in the block diagram of FIG. 2. These figures are examplary only, and those persons skilled in the art will appreciate the additional elements and modifications necessary to make the device 300 work in particular network environments. While the following examplary embodiments are described in connection with handheld wireless communication devices, it can be appreciated by those skilled in the art that these embodiments can also be implemented in other mobile devices such as PDAs, or the like.

As shown in the block diagram of FIG. 2, the handheld wireless communication device 300 includes a microprocessor 338 that controls the operation of the device 300. A communication subsystem 311 performs all communication transmission and reception with the wireless network 319. The microprocessor 338 further connects with an auxiliary input/output (I/O) subsystem 328, a serial port (preferably a Universal Serial Bus port) 330, a display 322, a keyboard 332, a speaker 334, a microphone 336, random access memory (RAM) 326, and flash memory 324. Other communication subsystems 340 and other device subsystems 342 are generally indicated as being functionally connected with the microprocessor 338 as well. An example of a communication subsystem 340 is that of a short range communication system such as BLUETOOTH® communication module or a Wi-Fi communication module (a communication module in compliance with IEEE 802.11b) and associated circuits and components. Additionally, the microprocessor 338 is able to perform operating system functions and preferably enables execution of software applications on the handheld wireless communication device 300.

The auxiliary I/O subsystem 328 can take the form of a variety of different navigation tools (multi-directional or single-directional) such as a trackball navigation tool 321 as illustrated in the examplary embodiment shown in FIG. 1, or a thumbwheel, a navigation pad, a joystick, or the like. These navigation tools are preferably located on the front surface of the handheld device 300 but may be located on any exterior surface of the handheld device 300. Other auxiliary I/O subsystems can include external display devices and externally connected keyboards (not shown). While the above examples have been provided in relation to the auxiliary I/O subsystem 328, other subsystems capable of providing input or receiving output from the handheld device 300 are considered within the scope of this disclosure. Additionally, other keys may be placed along the side of the handheld device 300 to function as escape keys, volume control keys, scrolling keys, power switches, or user programmable keys, and may likewise be programmed accordingly.

As may be appreciated from FIG. 1, the handheld wireless communication device 300 comprises a lighted display 322 located above a narrow angular keyboard 332 constituting a user input and suitable for accommodating textual input to the handheld wireless communication device 300. The front face 370 of the device has a navigation row 70 and a key field 650 that includes alphanumeric keys 630, alphabetic keys 632, numeric keys 62, and other function keys. Furthermore, the handheld device 300 is of unibody construction, also known as a "candy-bar" design, but it is also contemplated that the device may be of an alternative construction such as that commonly known as "clamshell," "flip-phone," "sliding," or "rotating" style.

Keys, typically of a push-button or push-pad nature, perform well as data entry devices but present problems to the user when they must also be used to effect navigational control over a screen-cursor. In order to solve this problem the present handheld wireless communication device 300 preferably includes an auxiliary input that acts as a cursor navigation tool and which is also exteriorly located upon the front face 370 of the device 300. Its front face location is particularly advantageous because it makes the tool easily thumb-actuable like the keys of the keyboard. A particularly usable embodiment provides the navigation tool in the form of a trackball 321, which is easily utilized to instruct two-dimensional screen cursor movement in substantially any direction, as well as act as an actuator when the trackball 321 is depressed like a button. The placement of the navigation tool 327 is preferably above the narrow angular keyboard 332 and below the display screen 322; here, it avoids interference during keyboarding and does not block the user's view of the display screen 322 during use.

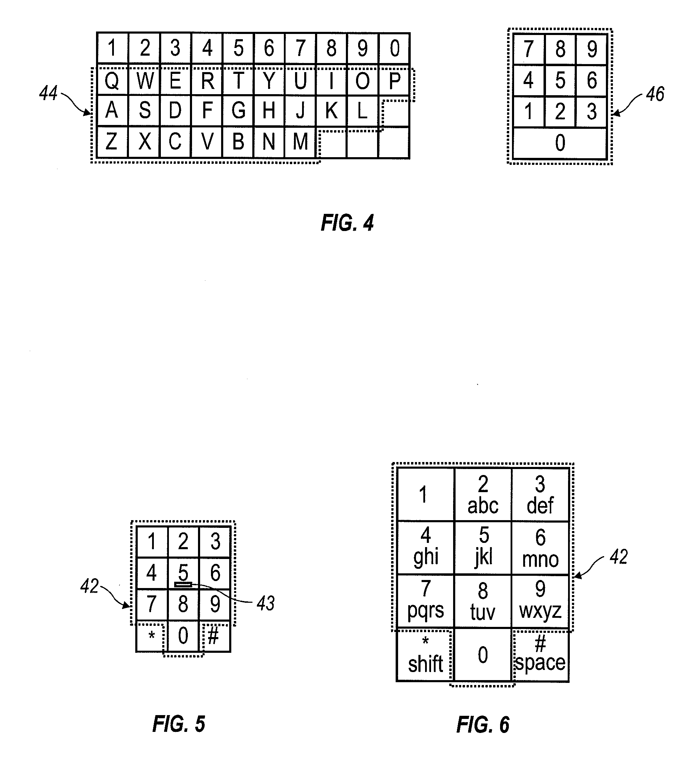

As further illustrated in FIG. 1, the present disclosure is directed to a handheld wireless communication device 300 configured to send and receive text messages. The handheld device 300 includes a hand cradleable housing 371 configured to be held in one hand by an operator of the device during text entry. A display 322 is included that is located on a front face 370 of the housing 371 and upon which information is displayed to the operator during text entry. A key field 650 is also located on the front face 370 of the housing 371 and comprises a plurality of keys including a plurality of alphanumeric keys, symbol keys, and function keys. The alphanumeric input keys 630 comprise a plurality of alphabetic and/or numeric keys having letters and/or numbers associated therewith. The order of the letters of the alphabetic keys 632 on the presently disclosed handheld device 300 can be described as being of a traditional, but non-ITU Standard E.161 layout. This terminology has been utilized to delineate the fact that such a telephone keypad as depicted in FIG. 6 may not allow for efficient text entry on the handheld device 300. A navigation row 70 including menu keys 652 and a navigation tool 327 is also located on the front face 370 of the housing 371. As illustrated more clearly in FIGS. 1 and 2, the navigation tool 327 can comprise several forms that include, but are not limited to: cursor keys, trackball, navigation wheel, joystick, touchpad, or barrel roller, among other types of auxiliary input devices. The location of the auxiliary I/O device 328 between the display 322 of the handheld communication device 300 and the narrow angular keyboard 332 provides the user with a familiar location for the navigation tool 327.

The handheld wireless communication device 300 is also configured to send and receive voice communications such as mobile telephone calls. To facilitate telephone calls, two call keys 605, 609 ("outer keys") are provided in the upper, navigation row 70 (so-called because it includes the navigation tool 327) at the outer ends of the navigation row 70. One of the two call keys is a call initiation key 605, and the other is a call termination key 609. The navigation row 70 also includes another pair of keys ("flanking keys") that are located immediately adjacent to the navigation tool 327, with one flanking key on either side of the navigation tool 327. It is noted that the outer keys are referred to as such not because they are necessarily the outermost keys in the navigation row - there may be additional keys located even further outwardly of the outer keys if desired - but rather because they are located outwardly with respect to the flanking keys. The flanking keys may, for instance, constitute the menu keys 652, which include a menu call-up key 606 and an escape or back key 608. The menu call-up key 606 is used to bring up a menu on the display screen 322 and the escape key 608 is used to return to the previous screen or previous menu selection. The functions of the call keys and the menu keys may, of course, be provided by buttons that are located elsewhere on the handheld device 300, with different functions assigned to the outer keys and the flanking keys.

In an examplary embodiment, as shown in FIG. 1, the handheld wireless communication device 300 is cradleable in the palm of a user's hand. The handheld device 300 is provided with a narrow angular keyboard 332 to enter text data and place telephone calls and a display screen 322 for communicating information to the user. A connect/send key 605 is preferably provided to aid in the placement of a phone call. Additionally, a disconnect/end key 609 is provided. The send key 605 and end key 609 preferably are arranged in the navigation row 70 including the navigation tool 327. Additionally, the navigation row 70 preferably has a menu call-up key 606 and a back key or escape key 608.

Furthermore, the handheld device 300 is equipped with components to enable operation of various programs, as shown in FIG. 2. In an examplary embodiment, the flash memory 324 is enabled to provide a storage location for the operating system 357, device programs 358, and data. The operating system 357 is generally configured to manage other application programs 358 that are also stored in memory 324 and executable on the processor 338. The operating system 357 honors requests for services made by application programs 358 through predefined application program 358 interfaces. More specifically, the operating system 357 typically determines the order in which multiple applications 358 are executed on the processor 338 and the execution time allotted for each application 358, manages the sharing of memory 324 among multiple applications 358, handles input and output to and from other device subsystems 342, and so on. In addition, users can typically interact directly with the operating system 357 through a user interface usually including the keyboard 332 and display screen 322. While in an examplary embodiment the operating system 357 is stored in flash memory 324, the operating system 357 in other embodiments is stored in read-only memory (ROM) or similar storage element (not shown). As those skilled in the art will appreciate, the operating system 357, device application 358 or parts thereof may be loaded in RAM 326 or other volatile memory.

In one examplary embodiment, the flash memory 324 contains programs/applications 358 for execution on the handheld device 300 including an address book 352, a personal information manager (PIM) 354, and the device state 350. Furthermore, programs 358 and other information 356 including data can be segregated upon storage in the flash memory 324 of the handheld device 300.

When the handheld device 300 is enabled for two-way communication within the wireless communication network 319, it can send and receive signals from a mobile communication service. Examples of communication systems enabled for two-way communication include, but are not limited to, the General Packet Radio Service (GPRS) network, the Universal Mobile Telecommunication Service (UMTS) network, the Enhanced Data for Global Evolution (EDGE) network, and the Code Division Multiple Access (CDMA) network and those networks, generally described as packet-switched, narrowband, data-only technologies which are mainly used for short burst wireless data transfer. For the systems listed above, the handheld wireless communication device 300 must be properly enabled to transmit and receive signals from the communication network 319. Other systems may not require such identifying information. GPRS, UMTS, and EDGE require the use of a Subscriber Identity Module (SIM) in order to allow communication with the communication network 319. Likewise, most CDMA systems require the use of a Removable Identity Module (RUIM) in order to communicate with the CDMA network. The RUIM and SIM card can be used in multiple different handheld wireless communication devices 300. The handheld wireless communication device 300 may be able to operate some features without a SIM/RUIM card, but it will not be able to communicate with the network 319. A SIM/RUIM interface 344 located within the device 300 allows for removal or insertion of a SIM/RUIM card (not shown). The SIM/RUIM card features memory and holds key configurations 351, and other information 353 such as identification and subscriber related information. With a properly enabled handheld wireless communication device 300, two-way communication between the handheld wireless communication device 300 and communication network 319 is possible.

If the handheld wireless communication device 300 is enabled as described above or the communication network 319 does not require such enablement, the two-way communication enabled handheld device 300 is able to both transmit and receive information from the communication network 319. The transfer of communication can be from the handheld device 300 or to the device 300. In order to communicate with the communication network 319, the handheld device 300 in the presently described examplary embodiment is equipped with an integral or internal antenna 318 for transmitting signals to the communication network 319. Likewise the handheld wireless communication device 300 in the presently described examplary embodiment is equipped with another antenna 316 for receiving communication from the communication network 319. These antennae (316, 318) in another examplary embodiment are combined into a single antenna (not shown). As one skilled in the art would appreciate, the antenna or antennae (316, 318) in another embodiment are externally mounted on the handheld device 300.

When equipped for two-way communication, the handheld wireless communication device 300 features a communication subsystem 311. As is well known in the art, this communication subsystem 311 is modified so that it can support the operational needs of the handheld device 300. The subsystem 311 includes a transmitter 314 and receiver 312 including the associated antenna or antennae (316, 318) as described above, local oscillators (LOs) 313, and a processing module 320, which in the presently described examplary embodiment is a digital signal processor (DSP) 320.

It is contemplated that communication by the handheld device 300 with the wireless network 319 can be any type of communication that both the wireless network 319 and handheld device 300 are enabled to transmit, receive and process. In general, these can be classified as voice and data. Voice communication is communication in which signals for audible sounds are transmitted by the handheld device 300 through the communication network 319. Data is all other types of communication that the handheld device 300 is capable of performing within the constraints of the wireless network 319.

Example device applications that can depend on such data include email, contacts and calendars. For each such application synchronization with home-based versions on the applications can be critical for either or both of their long term and short term utility. As an example, emails are often time sensitive, so substantially real time synchronization is highly desirable. Contacts, on the other hand, can be usually updated less frequently without inconvenience. Therefore, the utility of the handheld device 300 is significantly enhanced (if not enabled) when connectable within a communication system, and particularly when connectable on a wireless basis in a network 319 in which voice, text messaging, and other data transfer are accommodated.

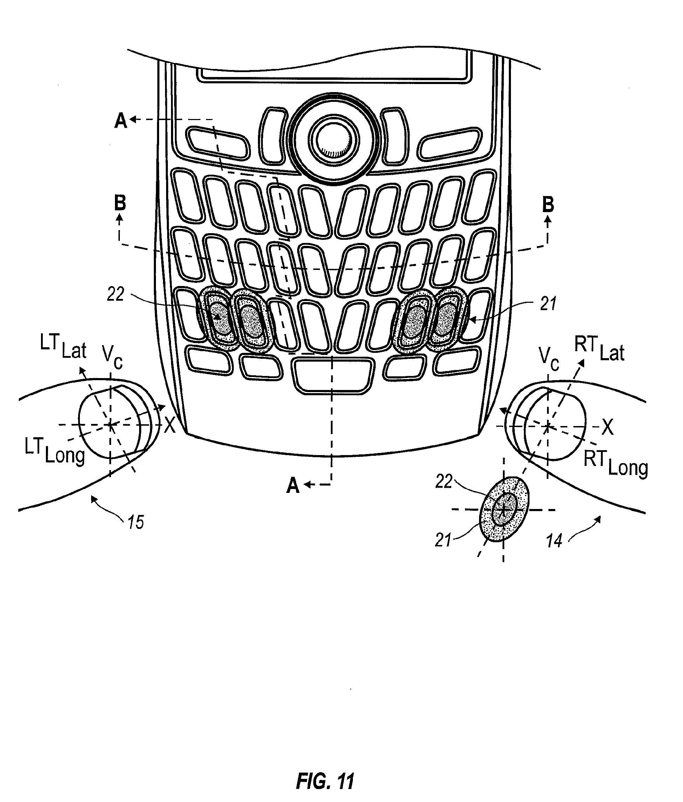

In at least one embodiment, a handheld wireless communication device 300 that is configured to send and receive email text messages comprises a hand cradleable housing 371 configured to be held in a text entry orientation by an operator or user. (See FIGS. 1 and 11). The housing 371 of the handheld wireless communication device 300 has a front face 370 at which a display screen 322 is located and upon which information is displayed to the operator of the handheld device 300 in the text entry orientation. The handheld device 300 further comprises a microprocessor configured to run software programs on the handheld device 300 and to receive operator commands from user inputs, such as a keyboard 332 and trackball navigation tool 321, located on the handheld device 300.

As intimated hereinabove, one of the more important aspects of the handheld wireless communication device 300 to which this disclosure is directed is its size. While some users will cradle the handheld device 300 in one hand using the thumb of such hand for input and control over the handheld device 300, it is intended that a predominance of users will grasp the handheld device 300 with both hands in such a manner that input and control over the handheld device 300 can be effected using the thumbs of both hands in which the handheld device 300 is held. As a handheld device 300 that is easy to grasp and desirably pocketable, the size of the handheld device 300 must be kept commensurately small. Of the device's dimensions, limiting its width is important for the purpose of assuring cradleability in a user's hand(s). Moreover, it is preferred that the width of the handheld device 300 be maintained at less than five centimeters. Keeping the handheld device 300 within these ultra narrow dimensional limits provides a hand cradleable unit that users prefer for its usability and portability. Limitations with respect to the height (length) of the handheld device 300 are less stringent when considering hand-cradleability. Therefore, in order to gain greater size, the handheld device 300 can be advantageously elongated so that its height is greater than its width, but still remains easily supported and operated in one hand.

A potential drawback is presented by the small size of the handheld device 300 in that there is limited exterior surface area for the inclusion of user input and device output features. This is especially true for the "prime real estate" on the front face 370 of the handheld device 300, where it is most advantageous to include a display screen 322 that outputs information to the user. The display screen 322 is preferably located above a narrow angular keyboard 332 that is exposed for user actuation and utilized for data entry into the handheld device 300 by the user. If the screen 322 is provided below the keyboard 332, a problem occurs in that viewing the screen 322 is inhibited when the user is inputting data using the narrow angular keyboard 332. Therefore it is preferred that the display screen 322 be above the input area, thereby solving the problem by assuring that the hands and fingers do not block the view of the screen 322 during data entry periods.

To facilitate textual data entry into the handheld device 300, an alphabetic keyboard 332 is provided. In an examplary embodiment, a full alphabetic narrow angular keyboard 332 is utilized in which there is one key per letter (with some of the letter keys also having numbers, symbols, or functions associated with them). In this regard, the associated letters can be advantageously organized in QWERTY, QWERTZ, AZERTY, or Dvorak layouts, among others, thereby capitalizing on certain users' familiarity with these various letter orders. In order to stay within the bounds of the limited front surface area, however, each of the keys must be commensurately small and narrow when, for example, twenty-six keys must be provided in the instance of the English language.

The narrow angular keyboard 332 includes a plurality of keys that can be of a physical nature such as actuable buttons, or they can be of a software nature, typically constituted by virtual representations of physical keys on a display screen 322 (referred to herein as "virtual keys"). It is also contemplated that the user input can be provided as a combination of the two types of keys. Each key of the plurality of keys has at least one actuable action, which can be the input of a character, a command or a function. In this context, "characters" are contemplated to exemplarily include alphabetic letters, language symbols, numbers, punctuation, insignias, icons, pictures, and even a blank space. Input commands and functions can include such things as delete, backspace, moving a cursor up, down, left or right, initiating an arithmetic function or command, initiating a command or function specific to an application program or feature in use, initiating a command or function programmed by the user and other such commands and functions that are well known to those persons skilled in the art. Specific keys or other types of input devices can be used to navigate through the various applications and features thereof. Further, depending on the application 358 or feature in use, specific keys can be enabled or disabled.

In the case of physical keys, all or a portion of the plurality of keys have one or more indicia representing character(s), command(s), and/or functions(s) displayed at their top surface and/or on the surface of the area adjacent the respective key. In the instance where the indicia of a key's function is provided adjacent the key, the indicia can be printed on the device cover beside the key, or in the instance of keys located adjacent the display screen 322. Additionally, current indicia for the key may be temporarily shown nearby the key on the display screen 322.

In the case of virtual keys, the indicia for the respective keys are shown on the display screen 322, which in one embodiment is enabled by touching the display screen 322, for example, with a stylus to generate the character or activate the indicated command or function. Some examples of display screens 322 capable of detecting a touch include resistive, capacitive, projected capacitive, infrared and surface acoustic wave (SAW) touchscreens.

Physical and virtual keys can be combined in many different ways as appreciated by those skilled in the art. In one embodiment, physical and virtual keys are combined such that the plurality of enabled keys for a particular application or feature of the handheld wireless communication device 300 is shown on the display screen 322 in the same configuration as the physical keys. Using this configuration, the user can select the appropriate physical key corresponding to what is shown on the display screen 322. Thus, the desired character, command or function is obtained by depressing the physical key corresponding to the character, command or function displayed at a corresponding position on the display screen 322, rather than touching the display screen 322.

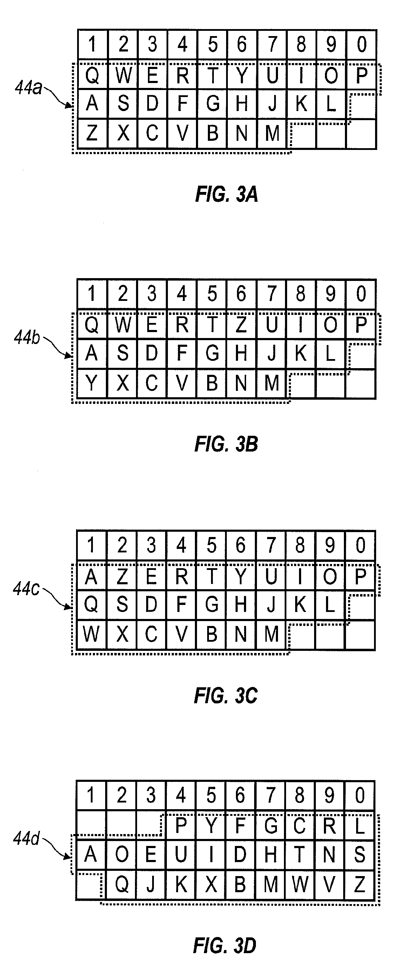

The various characters, commands, and functions associated with keyboard typing in general are traditionally arranged using various conventions. The most common of these in the United States, for instance, is the QWERTY keyboard layout. Others include the QWERTZ, AZERTY, and Dvorak keyboard configurations. The QWERTY keyboard layout is the standard English-language alphabetic key arrangement 44a shown in FIG. 3A. The QWERTZ keyboard layout is normally used in German-speaking regions; this alphabetic key arrangement 44b is shown in FIG. 3B. The AZERTY keyboard layout 44c is normally used in French-speaking regions and is shown in FIG. 3C. The Dvorak keyboard layout was designed to allow typists to type faster; this alphabetic key arrangement 44d is shown in FIG. 3D. In other examplary embodiments, keyboards having multi-language key arrangements can be implemented.

Alphabetic key arrangements are often presented along with numeric key arrangements. Typically, the numbers 1-9 and 0 are positioned in the row above the alphabetic keys 44a-d, as shown in FIG. 3A-D. Alternatively, the numbers share keys with the alphabetic characters, such as the top row of the QWERTY keyboard. Yet another examplary numeric key arrangement is shown in FIG. 4, where a "ten-key" style numeric keypad 46 is provided on a separate set of keys that is spaced from the alphabetic/numeric key arrangement 44. Still further, ten-key numeric arrangements may be common with or shared with a subset of the alphabetic keys. The ten-key styled numeric keypad 46 includes the numbers "7", "8", "9" arranged in a top row, "4", "5", "6" arranged in a second row, "1", "2", "3" arranged in a third row, and "0" in a bottom row. Further, a numeric phone key arrangement 42 is exemplarily illustrated in FIG. 5.

As shown in FIG. 5, the numeric phone key arrangement 42 may also utilize a surface treatment on the surface of the center "5" key. This surface treatment is configured such that the top surface of the key is distinctive from the surface of other keys. Preferably the surface treatment is in the form of a raised bump or recessed dimple 43. Alternatively, raised bumps may be positioned on the housing around the "5" key and do not necessarily have to be positioned directly on the key.

It is desirable for handheld devices 300 to include a combined text-entry keyboard and a telephony keyboard. Examples of such handheld devices 300 include mobile stations, cellular telephones, wireless personal digital assistants (PDAs), two-way paging devices, and others. Various keyboards are used with such devices and can be termed a full keyboard, a reduced-format keyboard, or phone key pad. In embodiments of a handheld device 300 having a full keyboard, the alphabetic characters are singly associated with the plurality of physical keys. Thus, in an English-language keyboard of this configuration, there are at least 26 keys in the plurality, with one letter per alphabetic key.

FIGS. 5 and 6 both feature numeric keys arranged according to the ITU Standard E.161 form. In addition, FIG. 6 also incorporates alphabetic characters according to the ITU Standard E.161 layout as well.

Reference is now made to FIG. 1, which discloses an examplary embodiment having a full alphabetic keyboard arrangement. In particular, as shown in FIG. 1, only one letter of the alphabet is associated with any given alphabetic key within the keys of the key field. Additionally, as alluded to above and shown in the referenced figures, some of the alphabetic keys also have numbers, symbols, or functions associated with them. In the specifically illustrated embodiment, the alphabetic keys (including those also having numbers, symbols, or functions associated with them) are arranged in a QWERTY arrangement, although any of the other full-keyboard arrangements (QWERTZ, AZERTY, or Dvorak) may also be implemented within the scope of this disclosure.

As described above, the International Telecommunications Union ("ITU") has established phone standards for the arrangement of alphanumeric keys. The standard phone numeric key arrangement shown in FIGS. 5 (no alphabetic letters) and 6 (with alphabetic letters) corresponds to ITU Standard E.161, entitled "Arrangement of Digits, Letters, and Symbols on Telephones and Other Devices That Can Be Used for Gaining Access to a Telephone Network." This standard is also known as ANSI TI.703-1995/1999 and ISO/IEC 9995-8:1994. As shown in FIG. 1, the numeric key arrangement can be overlaid on a QWERTY arrangement. The numeric arrangement as shown can be aptly described as a top-to-bottom ascending order three-by-three-over-zero pattern.

While several keyboard layouts have been described above, the layouts can be described as having keys disposed on the keyboard in a QWERTY, QWERTZ, Dvorak, or AZERTY key layout. These familiar keyboard layouts allow users to type more intuitively and quickly than, for example, on the standard alphabetic layout on a telephone pad.

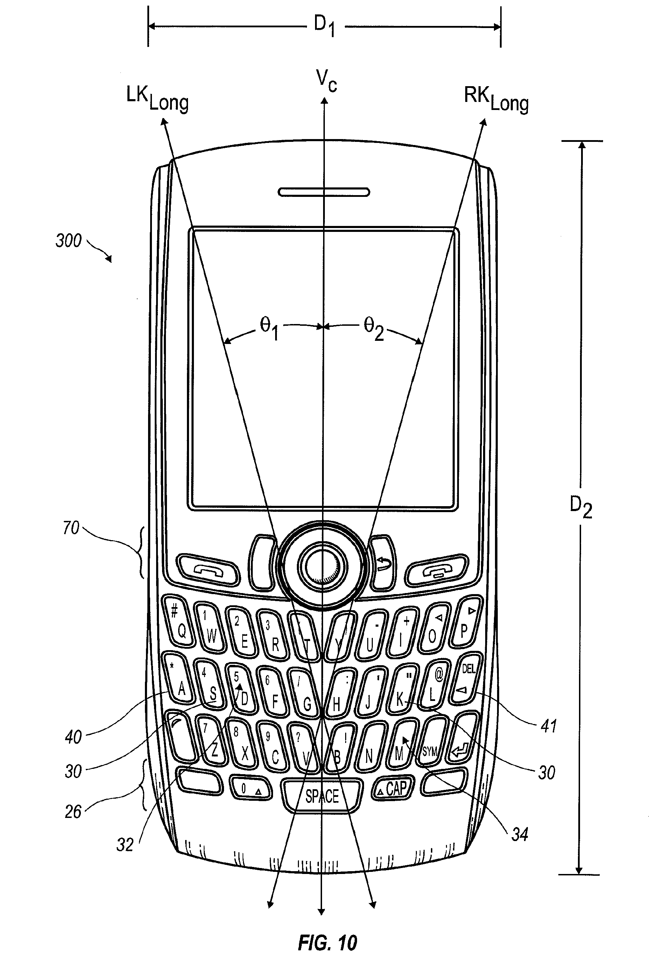

As previously mentioned, an important aspect of the handheld device 300 is its very small dimensions and the arrangement of a QWERTY array within this ultra narrow space. The handheld device 300 has a width D1 designed to be less than 5 centimeters, and a height D2, which is to be greater than the width D1. This extreme size reduction in the width results in a reduced area within which a keyboard can be placed. Incorporation of a full keyboard within the small device width is a preferred embodiment of the handheld device 300 and is accomplished by the design of elongated (ultra) narrow keys within the key fields 32 and 34 of the narrow angular keyboard 332. This has the benefit of maximizing key surface area in the vertical direction while accommodating a reduced size in the horizontal (width) direction. Moreover, arrangement of these ultra narrow keys within a standard QWERTY array, where the keys are not vertically aligned but instead arranged in an angular fashion to form a narrow angular keyboard (FIGS. 1 and 10) can further accommodate a full keyboard within a reduced device width while maintaining ease of keyboard usage for a user.

The narrow angular keyboard disclosed herein can be a full keyboard. A full keyboard in which all the keys of the alphabet are shown as indicia on the keys. The format of the indicia shown on the keys can comprise, for example, the letters A-Z in one of a standard keyboard layout and/or numerals as described later in this writing. Examples of different types of standard keyboard layouts include, but are not limited to: QWERTY, QWERTZ, AZERTY, and Dvorak layouts. In the embodiments disclosed, the keyboard is secured to the housing and the keys are located on the face side of the device.

Referring now to FIGS. 1 and 10, the narrow angular keyboard 332 is generally rectangular in appearance and positioned such that the left boundary of the narrow angular keyboard 332 is located adjacent to the left lateral side edge 40 of the handheld wireless communication device 300 and the right boundary of the narrow angular keyboard is located adjacent to the right lateral side edge 41 of the handheld wireless communication device 300 so that said narrow angular keyboard 332 spans a substantial entirety of the width D 1 of the device 300. The narrow angular keyboard 322 is bounded on the top by the navigational row 70, on the bottom by the lower row function keys 26, and by the left 40 and right 41 lateral side edges. As illustrated, left lateral side edge 40 and right lateral side edge 41 are generally parallel with respect to one another, but in other embodiments the left and right lateral side edges 40, 41 can be oriented differently. As illustrated in FIG. 10, the handheld device 300 has a vertical centerline Vc, a length D2 that is measured between top and bottom edges of the handheld device 300, and a width D1 that is measured between right and left lateral side edges of the handheld device 300. Preferably, the angular keys 30 and lower input keys 26 (function keys) of the keyboard contiguously extend from the left lateral side edge 40 to the right lateral side edge 41.

In general, the narrow angular keyboard 332 comprises a right-hand key field 34, which is located to the right of the vertical centerline Vc of the housing, and a left-hand key field 32, which is located to the left of the vertical centerline Vc of the housing. As illustrated more clearly in FIG. 10 each angular key 30 of both key fields 32, 34 is disposed at an angle θ1 and 02, respectively, along its longitudinal axes relative to the vertical centerline Vc. That is, the angular keys of the left-hand key field 32 are generally parallel with respect to one another and disposed along their longitudinal axes LK_{Long} (Left-Keyboard-Longitude) at a first angle θ1. Similarly, the angular keys of the right-hand key field 34 are generally parallel with respect to one another and disposed along their longitudinal axes RK_{Long} (Right-Keyboard-Longitude) at a second angle θ2. Furthermore, each key of the plurality of the keys has a lengthwise dimension that is substantially parallel to the longitudinal axis of the key and a widthwise dimension that is substantially perpendicular to the longitudinal axis of the key. The first angle θ1 is generally opposite to that of the second angle θ2 and the two angles are oriented to correspond with the natural position and motion of the human thumbs when typing on the handheld wireless communication device 300. Consequently, the first and second angles θ1, θ2 are between about ten degrees and about fifteen degrees as measured from the vertical centerline Vc. The lengthwise dimension of each key of the plurality of keys may vary according to the dimensions of the device 300. To accommodate the ultra narrow dimensions of handheld wireless communication devices 300, the lengthwise dimensions of the keys can be greater than the widthwise dimension. Examplary embodiments include, but are not limited by, a key lengthwise dimension that is at least twice that of the widthwise dimension, a lengthwise dimension that is at least 1.5 times that of the widthwise dimension or a lengthwise dimension that is between about 1.5 and about 2.5 times that of the widthwise dimension.

The keys comprising the key fields can be of several shapes that include, but are not limited to: substantially contoured or round shaped, wherein the top surface of the keys is substantially cylindrical in shape. However, at least one key of the plurality of keys of the keyboard may be substantially cylindrical in shape. Also the lengths and widths of the various keys can vary depending on a number of factors, for example width and height of the handheld wireless communication device 300, width and height of the keyboard, and the like; albeit the length of the keys will typically be greater than the width and elongated. Furthermore, at least two keys, one from each of the left and right-hand key fields, adjacent the vertical centerline Vc, are configured such that they are abutting and adjoining one another along line Vc. The abutting adjoinment of these two keys serves to form a generally downward pointing arrow, while the lower right and left corners of the keyboard can form diagonal edges. (See FIGS. 1 and 10).

The indicia of the plurality of keys may vary such that at least a portion of the said plurality of key located on the left-hand side of said vertical centerline are alphabetic input keys, having alphabetic indicia associated therewith, and a majority of said alphabetic input keys have more than one alphabetic letter associated therewith. Similarly, at least a portion of said plurality of keys located on the right-hand side of said vertical centerline are alphabetic input keys, having alphabetic indicia associated therewith. As shown in FIG. 10, the angular keys 30 can be arranged such that the upper row of keys in the left-hand key field 32 are keys "Q", "W", "E", "R", and "T." Another lower row of keys in the left-hand key field 32 can be: "A", "S", "D", "F", and "G." Still further, an even lower row of keys can comprise the keys "ALT", "Z", "X", "C", and "V". While these rows are described in relation to a standard QWERTY key arrangement, other types of arrangements including, but not limited to, QWERTZ, AZERTY, or Dvorak are considered to be within the scope of this disclosure. Likewise, an upper row in the right-hand key field 34 can comprise keys with indicia corresponding to letters "Y", "U", "I", "O", and "P". Another lower row of keys in the right-hand key field 34 can be: "H", "J", "K", "L", and symbol "<". Still further, an even lower row of keys can comprise the keys "B", "N", "M", "SYM", and a "Return" key. As mentioned above, these comprise embodiments of a standard QWERTY array, and other known arrays can be used instead and remain within the scope of this disclosure.

The indicia on the keys are provided so that the indicia generally appear uprightly oriented along an imaginary horizontal line that extends across a row of keys; the indicia can also appear along an arced imaginary line, if desired. The indicia can comprise alphabetic indicia as well as numeric indicia and/or other functions and symbols. The layout of the alphabetic indicia is generally provided to present the user with a familiar and easy to follow keyboard arrangement. The above described alphabetic indicia can be arranged in one of QWERTY, QWERTZ, AZERTY, and Dvorak layouts. As further illustrated in FIG. 10, angular key 30 corresponding to the letter D and numeral 5 can also comprise a physical indicator, such as a dimple 43, which protrudes from the surface of the key, so that a user may tactilely orient his/hers thumb or finger with respect to the narrow angular keyboard. Also, as shown in FIGS. 1 and 10, the keys can be formed to comprise a rounded, cylindrical, contoured or other shaped upper surface such that it can be easier for a user to discriminate between the various keys.

In general, typing or inputting information on a handheld wireless communication device 300 is typically performed by using the thumbs to strike the keys of the keyboard. Consequently, users of such handheld wireless communication devices 300 are forced to employ a "hunt and peck" type style of entry using their thumbs. This type of entry is further aggravated by the use of smaller devices in which the keys of the keyboard are made smaller and/or closer to one another.

Additionally, the range of motion of the human thumb is different from that of the human fingers. Typing on a keyboard of a handheld wireless communication device 300 can be described by the way in which the user holds the device 300 and strikes the keys. When the user desires to type on the handheld mobile communication device 300, the device 300 is rested in one or more palm(s) of the user's hand and the user's thumbs perform the key striking. The thumbs of a user generally move along diagonal motion lines that are relative to the housing of the handheld wireless communication device 300. To address the challenge of using smaller closely packed keys while accommodating the diagonal motion of a user's thumbs, the handheld wireless communication device 300 preferably embodies elongated narrow keys that are arranged in an angular orientation. This angular orientation relative to the device's vertical centerline Vc, follows the natural diagonal motion of a user's thumbs when using the handheld wireless communication device 300.

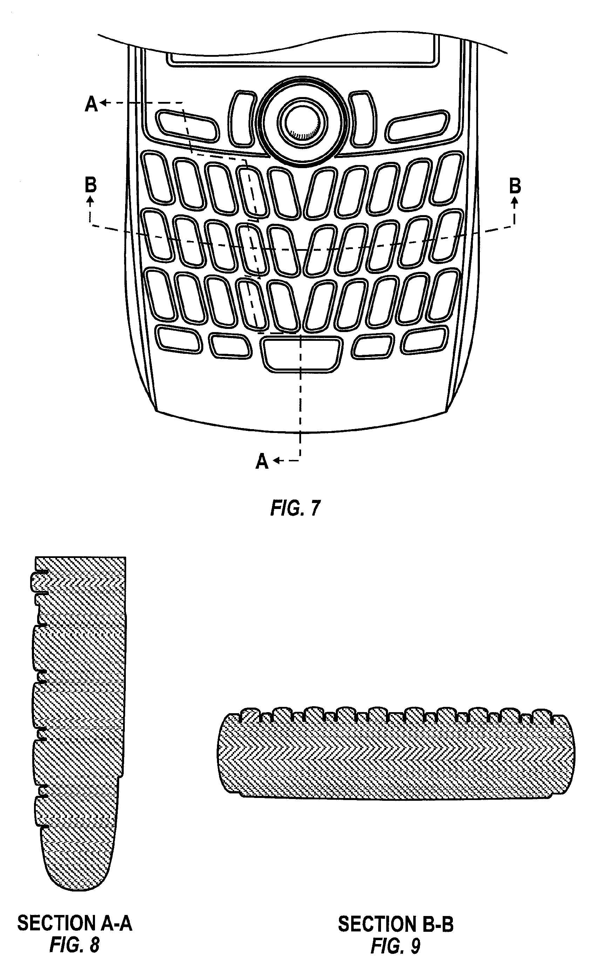

Referring now to the FIG. 11, when a user's thumbs 14, 15 are arranged in an angular fashion along the above-described diagonal motion lines, they create associated "zones" where a user's thumbs interface the keys of the keyboard. The zones include a thumb-pressing clearance zone 21 that represents the area of potential pressure applied to a key by a thumb, and an activation zone 22 representing the "sweet spot" area of maximum activation occurrence by a thumb's applied pressure. These zones represent the areas of pressure imparted by a user's thumbs upon a key, and are oriented along the natural diagonal motion of a user's thumbs when holding the handheld wireless communication device 300. Activation of zones 21 and 22 of each key can be accomplished by a kind of rolling action of the user's thumbs or in a manner that utilizes the inner sides of a user's thumbs. Arranging the keys in an angular fashion along the above-described diagonal motion lines, allows the narrow angular keyboard 332 to be better aligned with a user's thumbs when holding the handheld wireless communication device 300. This arrangement maximizes the longitudinal surface area between a thumb and a key resulting in more frequent and complete key-thumb interfacing through use of the thumbs pressure zones. Additionally, this angular arrangement allows a user to more naturally strike the narrow elongated keys resulting in more complete and accurate key activation, and increased typing ease and accuracy, while maintaining ease of use of the elongated narrow keys of the narrow angular keyboard 332. Moreover, as illustrated in the FIGS. 8, 9, 10, and 11, the top surface of the keys can be shaped with high points in a manner to provide additional ergonomic and intuitive feel to the keyboard, for example the keys can have a semi-cylindrical cross-sectional shape. Such high points of each key can maximize the ergonomic clearance zone between adjacent keys so as to minimize key actuation errors.

As illustrated in FIG. 11, when the handheld wireless communication device 300 is to be used by a user, the thumb(s) of the user are generally naturally diagonally oriented with respect to the housing and/or naturally diagonally oriented with respect to the vertical center Vc. Such diagonal orientation of the thumbs is best illustrated by lines RT_{Long} (Right-Thumb-Longitude), RT_{Lat} (Right-Thumb-Latitude) overlaid on the right thumb 14, and LT_{Long} (Left-Thumb-Longitude), LT_{Lat} (Left-Thumb-Latitude) overlaid on the left thumb 15, which represent the longitudinal and latitudinal axes of a user's right and left thumbs, respectively. From this view, it is seen that movement of a user's thumbs to actuate keys will most naturally and aptly occur along lines that are substantially parallel, or substantially perpendicular to these movement lines; such that movement of the left thumb will most naturally occur along lines that are parallel to lines LT_{Long} and LT_{Lat} and movement of the right thumb will most naturally occur along lines that are parallel to RT_{Long} and RT_{Lat}.

Consequently, as illustrated in FIGS. 10 and 11, angularly orienting the keys of the right-hand key field 34 such that the longitudinal axes of the keys on the right side (RK_{Long} (Right-Keyboard-Longitude)) of the vertical centerline Vc are perpendicular to the longitudinal axis of the right thumb (RT_{Long}) allows the user to more easily strike the various keys of the right-hand key field 34 with the right thumb according to the user's natural position and movement thereof. Similarly, angularly orienting the keys on the left-hand key field 32 such that the longitudinal axes of the keys on the left side (LK_{Long} (Left-Keyboard-Longitude)) of the vertical centerline Vc are perpendicular to the longitudinal axis of the left thumb (LT_{Long}), allows a user to more easily strike the various keys with the left thumb according to the user's natural position and movement thereof. Accordingly, arranging the elongated narrow keys in this manner allows a user to more naturally strike the narrow elongated keys, and results in more complete key activation, increased typing accuracy, while maintaining ease of use of the narrow angular keyboard 332.

When arranged in the above-described manner, the elongated and substantially contoured or round shaped keys of each of the left and right-hand key fields 32, 34 maintain substantial parallel and angularly oriented relationship with the keys in their respective key field- along angles θ1 and θ2, respectively. As a result, the left and right-hand key fields can appear as mirror images of each another. Alternatively, one of the left and right-hand key fields can be configured to comprise one or more keys, or one or more keys thereof can be differently oriented.

As shown in FIG. 10, the left and right-hand key fields 32, 34 are flanked by a lower row of function keys 26. Left and right-hand key fields 32, 34 can be configured such that the angular keys 30 are bound on the top by the navigation row 70 and on the bottom by the lower row of function keys 26. Preferably, the input keys of the navigation row 70 and the lower row of function keys 26 comprise one or more function keys; for example call send, call end, alt, spacebar, return, backspace, symbol, or shift keys and the like. In some embodiments, the function keys can be integrated with the keys of the left and right-hand key fields. Alternatively, the function keys can be located above or below the left and right-hand key fields and can be arranged to form a generally horizontal line. In some embodiments, the lower function keys 26 may be generally upwardly convexly shaped, or in the alternative, generally upwardly concavely shaped.

As previously indicated and shown in FIGS. 1 and 7, the shape of keys of the left and right-hand key fields can be contoured or rounded. The contoured or rounded shape is such that it provides more ergonomic data entry using the keys; that is, it is easier for a user to tactilely differentiate between the various keys of the keyboard. The cross-sectional areas of A and B in FIG. 7 are further illustrated in FIGS. 8 and 9. The vertical cross-section A-A depicted in FIG. 8 shows the elongated and contoured vertical shape of the keys in the key fields that are necessary for the narrow handheld wireless communication device 300. A horizontal cross-section B-B depicted in FIG. 9 shows the narrow arcuate horizontal shape of the keys required for the narrow handheld wireless communication device 300. Additionally, as illustrated in both FIGS. 8 and 9, each key of the plurality of keys of the narrow angular keyboard 332 has a top surface (key cap) that features a high point on each key. Such high points may be centered on the key (as depicted in FIGS. 8 and 9) or may have other top surface arrangements. As illustrated in FIG. 7, a preferred embodiment of the keys of the left and right-hand key fields are of an arcuate or contoured cross-sectional shape, and have a substantially cylindrical cross-sectional shape (FIGS. 8 and 9).

Examplary embodiments have been described hereinabove regarding both handheld wireless communication devices 300, and the communication networks 319 within which they operate (See FIG. 1). It is to be understood that the focus of the present disclosure relates to the design and incorporation of a narrow angular keyboard for a handheld wireless communication device 300 and its components and arrangements have been described herein. Detailed embodiments of the present invention are disclosed herein, however it is understood that these embodiments are merely examplary such that the invention may be embodied in other variations. Such variations are to be appreciated by those skilled in the art, and are within the scope of the invention as claimed below.

## Claims

1. A handheld wireless communication device 300 comprising:
a housing 371 having a display screen 321 located in a top portion thereof for displaying information to a user and a keyboard 332 exposed for user actuation below said display 322;
said device 300 having a vertical centerline Vc and a length measured between a top and a bottom edge of the device 300 and a width measured between right and left lateral side edges (41, 40) of the device 300, said length of the device 300 being greater than said width of the device 300 and said width of the device being less than five centimeters;
said keyboard 332 being defined by right, left, upper and lower boundaries and said keyboard 332 comprising a right-hand key field 34 composed of a plurality of keys located on a right-hand side of said vertical centerline Vc of the device 300 and a left-hand key field 32 composed of a plurality of keys located on a left-hand side of said vertical centerline Vc of the device 300;
each key of said plurality of keys located on the right-hand side of said vertical centerline Vc having a longitudinal axis LK_{Long} and said longitudinal axis LK_{Long} being oriented at a left-to right inclined angle θ1 from said vertical centerline Vc, wherein said left-to-right inclined angle θ1 is between about ten degree and about fifteen degrees from a vertical line substantially parallel to the vertical centerline Vc;
each key of said plurality of keys located on the left-hand side of said vertical centerline Vc having a longitudinal axis RK_{Long} being oriented at a right-to-left inclined angle θ2 from said vertical centerline Vc, wherein said right-to-left inclined angle θ2 is between about ten degree and about fifteen degrees from a vertical line substantially parallel to the vertical centerline Vc.

2. The handheld wireless communication device 300 as recited in claim 1, wherein a top surface of at least one of said plurality of keys is substantially cylindrical shaped.

3. The handheld wireless communication device 300 as recited in any one of claims 1-2, wherein each of said plurality of keys has a top surface that is substantially cylindrical shaped.

4. The handheld wireless communication device 300 as recited in any one of claims 1-3, further comprising a navigation tool 327 located substantially between said display screen 322 and said keyboard 332.

5. The handheld wireless communication device 300 as recited in claim 4, further comprising a pair of keys 652 flanking said navigation tool 327.

6. The handheld wireless communication device 300 as recited in any one of claims 4-5, wherein said navigation tool 327 is a trackball 321 based navigation tool.

7. The handheld wireless communication device 300 as recited in any one of claims 1-6, wherein said right-hand key field 34 and said left-hand key field 32 are flanked by a lower row of function keys 26.

8. The handheld wireless communication device as recited in claim 7, wherein said lower row of function keys 26 is generally upwardly convexly shaped.

9. The handheld wireless communication device 300 as recited in claim 7, wherein said lower row of function keys 26 is generally upwardly concavely shaped.

10. The handheld wireless communication device 300 as recited in any one of claims 1-9, wherein at least one key from said right-hand key field 34 that is adjacent said vertical centerline Vc adjoins a key from said left hand key field 32 that is adjacent said vertical centerline Vc and together form a downward pointing arrow.

11. The handheld wireless communication device 300 as recited in any one of claims 1-10, wherein each key of the plurality of keys has a lengthwise dimension that is substantially parallel to the longitudinal axis of the key and a widthwise dimension that is substantially perpendicular to the longitudinal axis of the key.

12. The handheld wireless communication device 300 as recited in claim 11, wherein the lengthwise dimension is greater than the widthwise dimension.

13. The handheld wireless communication device 300 as recited in any one of claims 11-12, wherein the lengthwise dimension is at least twice that of the widthwise dimension.

14. The handheld wireless communication device 300 as recited in any one of claims 11-12, wherein the lengthwise dimension is at least 1.5 times that of the widthwise dimension.

15. The handheld wireless communication device 300 as recited in any one of claims 11-12, wherein the lengthwise dimension is between about 1.5 and about 2.5 times that of the widthwise dimension.

16. The handheld wireless communication device 300 as recited in any one of claims 1-15, wherein said left boundary of said keyboard 332 is located adjacent said left lateral side edge 40 of the device 300 and said right boundary of said keyboard is located adjacent said right lateral side edge 41 of the device 300 so that said keyboard 332 spans a substantial entirety of the width of the device 300.

17. The handheld wireless communication device 300 as recited in any one of claims 1-16, wherein at least a portion of said plurality of keys located on the left-hand side of said vertical centerline Vc are alphabetic input keys, having alphabetic indicia associated therewith, and a majority of said alphabetic input keys have more than one alphabetic letter associated therewith.

18. The handheld wireless communication device as recited in any one of claims 1-17, wherein at least a portion of said plurality of keys located on the right-hand side of said vertical centerline Vc are alphabetic input keys, having alphabetic indicia associated therewith, and a majority of said alphabetic input keys have more than one alphabetic letter associated therewith.

## Amended claims

### Amended claims in accordance with Rule 137(2) EPC.

**1.** A handheld wireless communication device (300) comprising:
a housing (371) having a display screen (322) located in a top portion thereof for displaying information to a user and a keyboard (332) exposed for user actuation below said display (322);
said device (300) having a vertical centerline (Vc) and a length measured between a top and a bottom edge of the device (300) and a width measured between right and left lateral side edges (41, 40) of the device (300), said length of the device (300) being greater than said width of the device (300) and said width of the device being less than five centimeters;
said keyboard (332) being defined by right, left, upper and lower boundaries and said keyboard (332) comprising a right-hand key field (34) composed of a plurality of keys located on a right-hand side of said vertical centerline (Vc) of the device (300) and a left-hand key field (32) composed of a plurality of keys located on a left-hand side of said vertical centerline (Vc) of the device (300);
each key of said plurality of keys located on the left-hand side of said vertical centerline (Vc) having a longitudinal axis (LK_{Long}) and said longitudinal axis (LK_{Long}) being oriented at a left-to right inclined angle (θ1) from said vertical centerline (Vc), wherein said left-to-right inclined angle (θ1) is between about ten degrees and about fifteen degrees from a vertical line substantially parallel to the vertical centerline (Vc);
each key of said plurality of keys located on the right-hand side of said vertical centerline (Vc) having a longitudinal axis (RK_{Long}) being oriented at a right-to-left inclined angle (θ2) from said vertical centerline (Vc), wherein said right-to-left inclined angle (θ2) is between about ten degrees and about fifteen degrees from a vertical line substantially parallel to the vertical centerline (Vc); and
each key of said plurality of keys being arranged in an angular orientation, the arrangement of each key of the plurality of keys defining zones (21, 22) representing areas for imparting of pressure by a user's thumbs (14,15) upon a key.

**2.** The handheld wireless communication device (300) as recited in claim 1, wherein a top surface of at least one of said plurality of keys is substantially cylindrical shaped.

**3.** The handheld wireless communication device (300) as recited in any one of claims 1-2, wherein each of said plurality of keys has a top surface that is substantially cylindrical shaped.

**4.** The handheld wireless communication device (300) as recited in any one of claims 1-3, further comprising a navigation tool (327) located substantially between said display screen (322) and said keyboard (332).

**5.** The handheld wireless communication device (300) as recited in claim 4, further comprising a pair of keys (652) flanking said navigation tool (327).

**6.** The handheld wireless communication device (300) as recited in any one of claims 4-5, wherein said navigation tool (327) is a trackball (321) based navigation tool.

**7.** The handheld wireless communication device (300) as recited in any one of claims 1-6, wherein said right-hand key field (34) and said left-hand key field (32) are flanked by a lower row of function keys (26).

**8.** The handheld wireless communication device as recited in claim 7, wherein said lower row of function keys (26) is generally upwardly convexly shaped.

**9.** The handheld wireless communication device (300) as recited in claim 7, wherein said lower row of function keys (26) is generally upwardly concavely shaped.

**10.** The handheld wireless communication device (300) as recited in any one of claims 1-9, wherein at least one key from said right-hand key field (34) that is adjacent said vertical centerline (Vc) adjoins a key from said left hand key field (32) that is adjacent said vertical centerline (Vc) and together form a downward pointing arrow.

**11.** The handheld wireless communication device (300) as recited in any one of claims 1-10, wherein each key of the plurality of keys has a lengthwise dimension that is substantially parallel to the longitudinal axis of the key and a widthwise dimension that is substantially perpendicular to the longitudinal axis of the key.

**12.** The handheld wireless communication device (300) as recited in claim 11, wherein the lengthwise dimension is greater than the widthwise dimension.

**13.** The handheld wireless communication device (300) as recited in any one of claims 11-12, wherein the lengthwise dimension is at least twice that of the widthwise dimension.

**14.** The handheld wireless communication device (300) as recited in any one of claims 11-12, wherein the lengthwise dimension is at least 1.5 times that of the widthwise dimension.

**15.** The handheld wireless communication device (300) as recited in any one of claims 11-12, wherein the lengthwise dimension is between about 1.5 and about 2.5 times that of the widthwise dimension.

**16.** The handheld wireless communication device (300) as recited in any one of claims 1-15, wherein said left boundary of said keyboard (332) is located adjacent said left lateral side edge (40) of the device (300) and said right boundary of said keyboard is located adjacent said right lateral side edge (41) of the device (300) so that said keyboard (332) spans a substantial entirety of the width of the device (300).

**17.** The handheld wireless communication device 300 as recited in any one of claims 1-16, wherein at least a portion of said plurality of keys located on the left-hand side of said vertical centerline (Vc) are alphabetic input keys, having alphabetic indicia associated therewith, and a majority of said alphabetic input keys have more than one alphabetic letter associated therewith.

**18.** The handheld wireless communication device as recited in any one of claims 1-17, wherein at least a portion of said plurality of keys located on the right-hand side of said vertical centerline (Vc) are alphabetic input keys, having alphabetic indicia associated therewith, and a majority of said alphabetic input keys have more than one alphabetic letter associated therewith.
